# EUROPÄISCHE PATENTSCHRIFT

(11) **EP 0 731 151 B1**
(45) Veröffentlichungstag und Bekanntmachung des Hinweises auf die Patenterteilung: **18.07.2001**
(21) Anmeldenummer: 96103382.6
(22) Anmeldetag: 05.03.1996
(51) Int. Cl.: C09J 5/00, B41F 15/38, D06N 7/00, D06M 17/00

(54) **Verfahren und Vorrichtung zum rasterförmigen Beschichten von bahnförmigen flexiblen Flächengebilden mit Schmelzklebern**
Method and device for the patterned coating of bands of flexible sheets with a hot-melt adhesive
Procédé et dispositif pour le revêtement sous forme de trames avec des colles thermofusibles de configurations textiles en bande et flexibles

(30) Priorität: 10.03.1995 DE 19508744; 01.09.1995 DE 19532387
(43) Veröffentlichungstag der Anmeldung: 11.09.1996
(73) Patentinhaber: Kufner Textilwerke GmbH, D-81379 München (DE)
(72) Erfinder: Hefele, Josef, Dr., 82166 Gräfelfing (DE)
(74) Vertreter: Hansen, Bernd, Dr. Dipl.-Chem.

(56) Entgegenhaltungen:
- EP-A- 0 333 400
- EP-A- 0 675 183
- GB-A- 836 097

## Beschreibung

Diese Erfindung betrifft Verfahren und eine Vorrichtung zum rasterförmigen Beschichten von bahnförmigen flexiblen Flächengebilden, insbesondere Einlagestoffen für Bekleidungen, mit Schmelzklebern. Die Beschichtung besteht aus zwei aufeinandersitzenden Rasterschichten: einer Basisschicht, die nicht oder nur schwach thermoaktivierbar ist und einer Deckschicht aus thermoaktivierbarem Schmelzkleber mit höherer Fließfähigkeit im Schmelzzustand als die Basisschicht. Beide Schichten werden im Siebdruckverfahren unter Anwendung von Pasten aufgedruckt und stellen eine rasterförmige Doppelbeschichtung dar.

Bereits bekannt gewordene Doppelbeschichtungsverfahren sind im "Handbuch der textilen Fixiereinlagen" von Sroka, 3. erweiterte Auflage 1993, Seiten 131 bis 136 beschrieben worden. Von den vier angegebenen Verfahren ist das heute nahezu allein noch angewandte das Punkt-Riesel-Verfahren, bei dem der Pastenpunkt mit einer Siebdruckrundschablone auf einer Einlagebahn mit Schmelzkleberpulver bestreut und dann der am Aufdruck nicht haften bleibende Pulverüberschuß durch Schütteln, Blasen und Saugen wieder entfernt wird. Der Nachteil dieses Verfahrens ist, daß das Streupulver auch an den Rändern der Druckpunkte über deren Auflagefläche am Träger hinaus haften bleibt und daneben feinstkörniges Pulver zwischen den Druckpunkten nur schwer zu entfernen ist. Gewisse Griffverstrammungen und Rückschlagsneigungen sind dadurch nicht vermeidbar.

Das weiterhin angeführte Doppelpulverpunktverfahren arbeitet im Tiefdruck mit zwei hintereinander auf einer Gravurwalze aufsitzenden Trichterrakeln. Um dieses Verfahren ausführen zu können, sind zwei aufeinander abgestimmte unterschiedliche Schmelzkleberpulversorten erforderlich, die sich unter gleichen Temperaturbedingungen von Gravur- und Heizwalze aus den Gravurvertiefungen herauslösen, was die Anwendbarkeit des Verfahrens stark einschränkt. Außerdem ist dabei nicht vermeidbar, daß sich die Pulver in den Gravurvertiefungen und im Pulverbett vor der zweiten Rakel unkontrolliert vermischen. Einen Einsatz hat das Verfahren daher kaum finden können.

Auch ein Doppelpastenpunktverfahren ist bereits beschrieben worden, bei welchem mit einer Siebdruckrundschablone mit zwei Innenrakeln zwei unterschiedliche Pasten aufgedruckt und übereinander positioniert werden. Eine zufriedenstellend arbeitende Ausführungsform konnte für dieses Verfahren bisher noch nicht aufgefunden werden und daher hat auch dieses Verfahren bisher noch keinen Eingang in die Praxis gefunden.

Im obenerwähnten Handbuch ist schließlich noch ein Rollcoater-Beschichtungsverfahren angeführt, das einige Zeit praktiziert wurde. Im ersten Arbeitsgang erfolgt eine Siebdruckpastenbeschichtung der Basisschicht und im zweiten Arbeitsgang werden die getrockneten und gesinterten Pastenpunkte der Basisschicht mit den Kuppen in einen sehr gleichmäßigen Film einer Schmelzkleberdispersion oder -lösung auf einem Walzenmantel eines Rollcoaters getaucht. Der Nachteil des Verfahrens besteht darin, daß feine Raster dafür ungeeignet sind, eine hohe Exaktheit an die Gleichmäßigkeit der Filmausbildung auf dem Rollcoater gestellt wird und der maschinelle und produktionstechnische Aufwand hoch ist.

In jüngerer Zeit ist nochmals aufgegriffen worden, den Doppelschichtaufbau dadurch zu erzeugen, daß zwei exakt gleiche Rundschablonen im Abstand extrem genau hintereinander angeordnet werden und mit der ersten die Basisschicht und mit der zweiten die Deckschicht aufgebracht wird. Die außerordentlich hohen Anforderungen zur Realisierung der versatzfreien Positionierung sämtlicher Druckpunkte von beiden Siebschablonen übereinander lassen eine Ausführbarkeit dieser Methode mindestens im feinen Rasterbereich kaum aussichtsreich erscheinen.

Die Aufgabenstellung der vorliegenden Erfindung bestand daher darin, ein einfach und sicher anwendbares, rationell arbeitendes Verfahren zur Doppelbeschichtung ausfindig zu machen, das einen bescheidenen maschinellen Mehraufwand gegenüber Einfachbeschichtungen erfordert, auch bei sehr feinen Rasterpunkten exakt und sicher ausführbar ist, Griffverhärtungen vermeidet und tunlichst den Anwendungsbereich der Doppelbeschichtung erweitern soll.

Überraschenderweise ist dies mit einem geeignet modifizierten Doppelpastenpunktverfahren zu erreichen. In den Zeichnungen zeigt:
- Figur I:: ein modifiziertes Siebdruckaggregat,
- Figur II:: einen vergrößerten Ausschnitt von I,
- Figur III:: eine Einzelperforation einer Siebdruckschablone im Anlieferungszustand,
- Figur IV:: eine außen glatt geschliffene Einzel perforation einer Siebdruckschablone, und
- Figur V:: eine von außen partiell mit Druckpaste gefüllte Einzelperforation einer Siebdruckschablone.

Das erfindungsgemäß modifizierte Verfahren zum rasterförmigen Beschichten von bahnförmigen flexiblen Flächengebilden, wie Einlagestoffen für Kleidungsstücke, mit Schmelzklebern durch Auftragen von zwei übereinandersitzenden rasterförmigen Pastenschichten, die am Fertigprodukt aus einer nicht oder nur schwach thermoaktivierbaren Basisschicht und einer darauf aufsitzenden gut thermoaktivierbaren Schmelzkleberschicht mit höherem Schmelzfluß als die Basisschicht bestehen, im Siebdruckverfahren ist dadurch gekennzeichnet, daß in die Perforationen einer Siebdruckrundschablone (1) von der Außenseite her unter vorzugsweise teilweiser Auffüllung jeder Perforation eine Paste (2) aus einer Lösung oder Dispersion einer am Fertigprodukt nicht oder nur schwach thermoaktiverbaren Kunststoffmasse eingerakelt und anschließend die Siebdruckrundschablone (1) mit dem Flächengebilde (3) in Kontakt gebracht wird, das dann mit der Innenrakel (4) gemeinsam mit Paste (2) mit einer Paste (5) der thermoaktivierbaren Schmelzklebermasse durch die Perforationen hindurch bedruckt wird, worauf sich nach Ablösung des bedruckten Flächengebildes (8) von der Siebdruckrundschablone (1) eine Trocknung und Sinterung des doppelschichtig ausgebildeten Aufdruckes anschließt.

Das Verfahren kann mit den üblichen Siebdruckpastenanlagen, die mit Innenrakel und einer Rundschablone im Pastendruck arbeiten, mit relativ bescheidenem Anbau ausgeführt werden. Der Anbau besteht in erster Linie aus einer auf der Siebschablonen(1)-außenseite aufsitzenden Rakel (6) mit vorzugsweise scharf geschliffener Streichkante, vor welche eine Paste (2) aus einer Kunststoffdispersion, die feinporig und sahnig aufgeschäumt sein kann, über eine Pastenzufuhr aufgelegt wird. Die Fläche der Rakel (6) bildet mit der Schablonen(1)-rundung auf der Seite der Pastenzufuhr einen stumpfen Winkel, der zwischen 120° und 150° liegen kann. Die Pastenzufuhr kann über ein Rohr (2a) mit einer Reihe von Bohrungen erfolgen, deren Durchmesser sich sukzessive ändert und so abgestimmt ist, daß über die gesamte Druckbreite die Pastenaustrittsmenge möglichst gleich ist. Der Pastenaustritt aus den Bohrungen des Rohres kann in eine Vorkammer erfolgen, aus der die Paste dann über eine Breitschlitzdüse oder durch Bohrungen auf die Pastenvorlage (2) vor der Rakel (6) aufläuft.

Zum Befüllen der Perforationen mit der Außenrakel (6) ist es vorteilhaft, die Schablone (1) unter der als Streichkante fungierenden Berührungslinie der Außenrakel mit der Rundschablone (1) mit einer über die Gesamtbreite der Schablone (1) reichenden innenseitig anliegenden Vorrichtung (7) abzustützen, die sich der Innenkrümmung der Schablone (1) anschmiegt und über die Schabloneninnenseite hinweggleitet. Vorzugsweise erfolgt die Abstützung mit zwei schräg und kurz nebeneinander sitzenden Rakeln (7a), deren Streichkanten die Schablone (1) unter dem Schablonenzenit berühren.

Nach dem Befüllen der Perforationen der Rundschablone (1) erfolgt der Druckvorgang auf dem Flächengebilde (3) mit der Innenrakel (4), welche die Paste (5) der thermoaktivierbaren Schmelzklebermasse über eine Pasteninnenzufuhr vorlegt. Die Befüllungen der Perforationen mit der Paste (2) werden dabei als Basisschicht und die Paste (5) der thermoaktiven Schmelzklebermasse als Deckschicht auf das Flächengebilde (3) aufgesetzt. Nach Ablösen des nun bedruckten Flächengebildes (8) von der Rundschablone (1) schließt sich die Trocknung und Sinterung des doppelschichtig ausgebildeten Aufdruckes durch Umluftbeheizung und eventuell Infrarotbestrahlung an.

Vor der Außenrakel (6) kann noch eine weitere Außenrakel (9) vorgesehen sein, die mit nur schwachem Andruck und annähernd tangential an die Rundschablone (1) anliegen soll. Etwaige auf der Schablone (1) verbleibende Pastenreste werden durch sie in die Perforationen eingedrückt. Die Rakel (6) und die Rakel (9) können an ihren zur Rakelspitze hinweisenden Rändern der Halterungen noch mit senkrecht nach oben stehenden verlängerten Wandungen (6a) versehen sein. Damit wird mit den beiden Rakeln ein kleiner Pastenvorratstrichter ausgebildet.

Vor der Rakel (9) kann zusätzlich ein Klettenband (9a) auf der Schablone aufsitzen. Das Klettenband (9a) streift während der Druckperiode über die Schablonenaußenseite nach dem Drucken hinweg und fängt etwaige Flusen, die vom Beschichtungsträger stammen, ab.

Die mit der Außenrakel (6) in die Perforationen der Rundschablone (1) eingebrachte Paste kann auf Polymeren wie Copolyestern, Copolyamiden oder Niederdruck-Polyethylenen basieren. Die Trockensubstanzen dieser Pasten sollen im Schmelzbereich über cirka 125°C und ihr Schmelzindex nach DIN 53 735 soll bei 21,6 N Belastung und 160°C Meßtemperatur unter ca. 10g/10 min liegen. Bevorzugt sind jedoch Anteile an wässrigen Dispersionen, die vernetzende Polyurethane, Poly(meth)acrylate, Polybutadien-Acrylnitrile, Polybutadien-Styrol-Acrylnitrile oder Acetatcopolymere enthalten. Pasten dieser Dispersionen können auf das 1,2- bis 2-fache Volumen feinstporig und sahnig aufgeschäumt werden, unter Erzeugung einer mäßig viskosen Paste mit geringer Fließneigung.

Bevorzugt wird die Paste (2) in einer solcher Beschaffenheit eingerakelt, daß alle Perforationen nur mit einem Teil des möglichen Füllvolumens befüllt werden. In Figur (V) ist eine solche Teilbefüllung einer Einzelperforation dargestellt. Um eine optimale Teilbefüllung der Perforationen sicherzustellen, können die Dispersionen bevorzugt feine Pulver, wie Schmelzkleberpulver, PVC-Pulver, auch mineralische Füllstoffe und weiterhin Anteile an Andickungsmittel, fettsauren Salzen, Paraffinen, Weichmacher, Wachsen und Koagulantien enthalten. Derartige Zusätze können einen sauberen Rakelabstrich, eine leichte und praktisch rückstandslose Ablösung des bedruckten Flächengebildes von der Schablonen (1)-wandung und eine Teilbefüllung aller Perforationen begünstigen, ohne bis zur Inneseite der Schablone vorzudringen und diese zu benetzen.

Bei der Herstellung von fixierbaren Einlagestoffen für Oberbekleidungen soll die Pastenbasis für die Innenrakel auf Copolyamiden, Copolyestern oder Polyurethanen mit einem Schmelzbereich der Trockenmasse von etwa 95 bis 120°C und einem Schmelzindex nach DIN 53 735 von 15 bis 100g/10 min bei 160°C und 21,6 N Belastung beruhen. Werden dagegen fixierbare Hemdeneinlagen gefertigt, ist es günstiger, wenn der Schmelzbereich höher und über 120°C liegt und Niederdruck-Polyethylen oder Copolyester zur Anwendung gelangen.

Um mit der Außenrakel einen sauberen Abstrich auf der Schablonenaußenseite zu erhalten, ist es besonders vorteilhaft, eine Rundschablone (1) mit einem glatten Außenschliff einzusetzen. Figur III stellt eine Einzelperforation einer Schablone (1) im Anlieferungszustand dar. Die Perforation ist am Rand mit einem Wulst versehen. In Figur IV ist dieser Wulst glatt abgeschliffen.

Die Unterwalze (10), auf der die Rundschablone (1) aufsitzt, soll vorzugsweise einen Weichgummiüberzug (11) besitzen. Um sie ständig sauber zu halten, kann sie mit einer Wassersprüh- und Bürsteinrichtung (12) dauernd gereinigt werden. Zur Entfernung des Wasserfilms auf der Unterwalze (10) kann eine Rakel oder eine gummierte Preßwalze (13) nachgeschaltet sein.

Die Beschichtung dieses Doppelpunktverfahrens kann in gleicher Weise wie die Einfachpunkt-Pastenbeschichtung in einem großen Bereich des Auftragsgewichtes und des Rasters ausgeführt werden. Der Raster kann zwischen 11 und 38 mesh und das Auftragsgewicht zwischen etwa 7 und 30 g/m² variiert werden. In allen Fällen sind Basis- und Deckschicht genau übereinander positioniert, ohne daß eine der beiden Schichten über die andere hinausragt. Das Gewichtsverhältnis von Basis- zu Deckschicht ist ebenfalls leicht variierbar und soll 20:80 bis 50:50 betragen.

Das Verfahren gestattet auch Anwendungen durchzuführen, die bisher nicht oder kaum möglich waren. Die Beschichtung von Einlagen mit Niederpolyethylenen für den Hemdenbereich mit dem Punkt-Riesel-Verfahren konnte bisher wegen der hohen Explosionsgefährdung des Polyethylenstaubes nicht erfolgen. Eine derartige Gefährdung entfällt bei dem erfindungsgemäßen Verfahren. Auch ist es jetzt auf einfachem Wege möglich, eine Rückenverstärkung von Blusen- und Kleideroberstoffen alleine mit einer Transferbeschichtung, die nach dem Transfervorgang nicht mehr thermoaktivierbar ist, durchzuführen. Ein dafür bisher vorgeschlagenes Verfahren war zu umständlich und zu teuer und einfachere Verfahren waren nicht ausführbar. Schließlich ist es möglich, auch gitterig ausgebildete Flächengebilde, z.B. Webwirkwaren mit sehr geringen Schußdichten, die bisher nicht einwandfrei zu beschichten waren, besser zu beschichten.

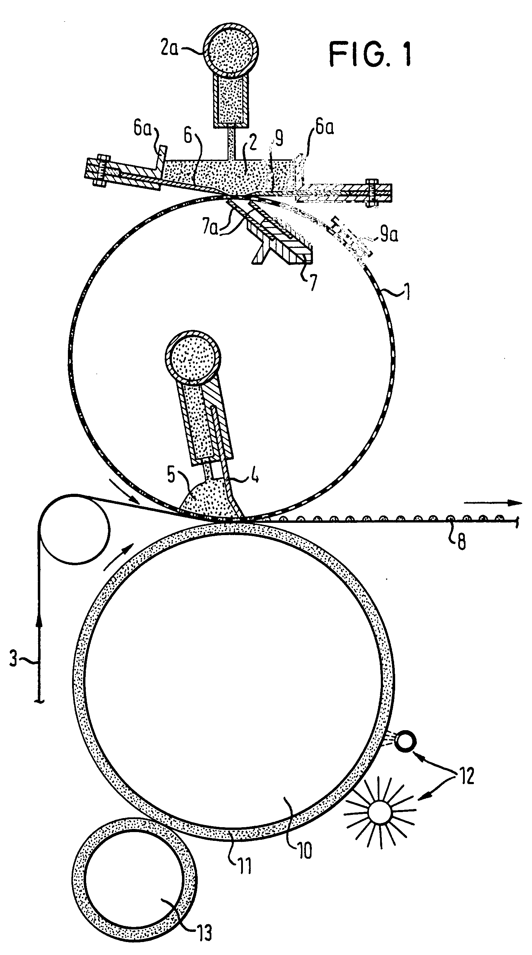

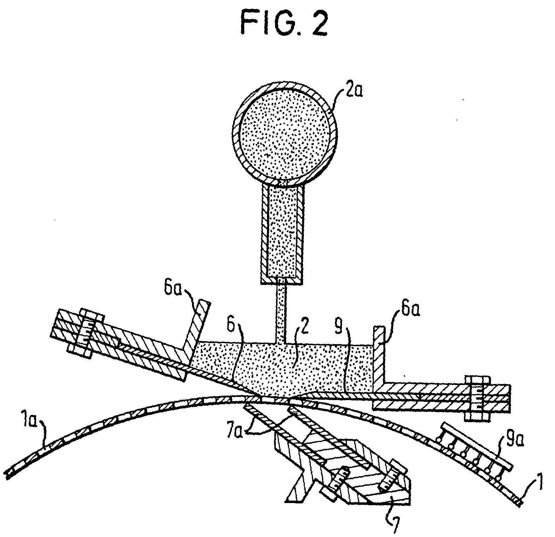

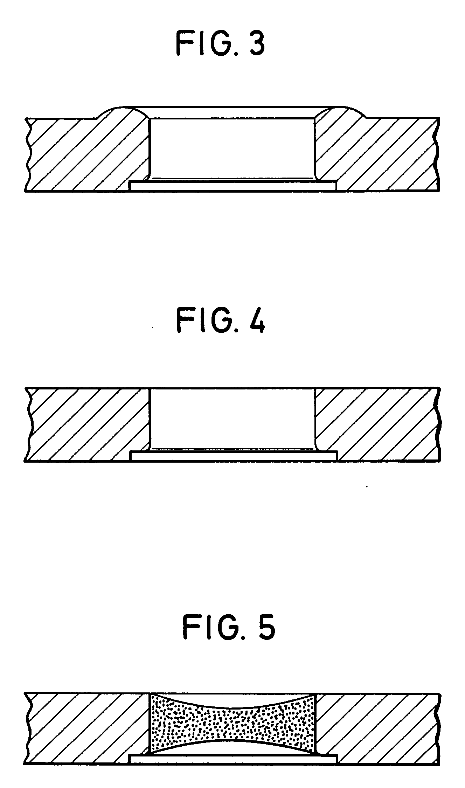

## Patentansprüche

1. Verfahren zum rasterförmigen Beschichten von bahnförmigen flexiblen Flächengebilden, wie Einlagestoffen für Kleidungsstücke, mit Schmelzklebern durch Auftragen von zwei aufeinandersitzenden rasterförmigen Pastenschichten, die am Fertigprodukt aus einer nicht oder nur schwach thermoaktivierbaren Basisschicht und einer darauf aufsitzenden thermoaktivierbaren Schmelzkleberschicht mit höherem Schmelzfluß als die Basisschicht bestehen, im Siebdruckverfahren,
***dadurch gekennzeichnet****, daß*
in die Perforationen einer Siebdruckrundschablone (1) von der Außenseite her unter Befüllung jeder Perforation eine Paste (2) aus einer Lösung oder vorzugsweise Dispersion einer am Fertigprodukt nicht oder nur schwach thermoaktivierbaren Kunststoffmasse eingerakelt und anschließend die Siebdruckrundschablone (1) mit dem Flächengebilde (3) in Kontakt gebracht und mit einer Innenrakel (4) zusätzlich zur außenseitig aufgebrachten Paste (2) mit einer weiteren Paste (5), die die thermoaktivierbare Schmelzklebermasse bildet, durch die Perforationen hindurch bedruckt wird, worauf sich nach Ablösung des bedruckten Flächengebildes (8) von der Siebdruckrundschablone eine Trocknung und Sinterung des doppelschichtig ausgebildeten Aufdruckes anschließt.

2. Verfahren nach Anspruch 1,
***dadurch gekennzeichnet****, daß*
bevorzugt eine teilweise Pastenbefüllung aller Perforationen der Siebdruckrundschablone (1) von außen mit einer auf der Schablonenaußenseite aufsitzenden Rakel (6) erfolgt, deren Streichkante scharf geschliffen ist und welche mit stumpfem Winkel von 120 bis 150° zur Schablonenwandung auf der Seite der Pasten-(2)-vorlage auf der Siebdruckrundschablone (1) aufsitzt und schaufelnd die Befüllung aller Perforationen bewirkt.

3. Verfahren nach Anspruch 1 und 2,
***dadurch gekennzeichnet****, daß*
die Befüllung der Schablonenperforationen von außen unter Zuhilfenahme einer unter der Berührungslinie der Außenrakel (6) innenseitig anliegenden Stützvorrichtung (7) vorgenommen wird, die über die Gesamtbreite der Siebdruckrundschablone (1) reicht und sich an die Innenkrümmung der Schablone (1) mit vorzugsweise zwei unter dem Schablonenzenit eng nebeneinander und schräg sitzenden Rakelblechen (7a) an die Schablonen(1)-innenwandung anschmiegt.

4. Verfahren nach einem der Ansprüche 1 bis 3,
***dadurch gekennzeichnet****, daß*
die mit Hilfe der Außenrakel (6) als Basisschicht aufgetragene Beschichtungspaste (2) Polyurethane, Polyacrylate, Polybutadienacrylnitrile, Polybutadien-Styrol-Acrylnitrile oder Acetatcopolymere enthält.

5. Verfahren nach einem der Ansprüche 1 bis 4,
***dadurch gekennzeichnet****, daß*
die Außenbeschichtungspaste (2) feinkörnige Pulver aus Schmelzklebern, PVC, mineralischen Füllstoffen und weiterhin fettsaure Salze, Weichmacher, Andickungsmittel, Koagulantien, Paraffine oder Wachse enthält.

6. Verfahren nach einem der Ansprüche 1 bis 5,
***dadurch gekennzeichnet****, daß*
die mit der Innenrakel (4) aufgetragene Schmelzkleberpaste (5) auf Copolyamiden, Copolyestern, Niederdruck-Polyethylenen oder Polyurethanen basiert.

7. Verfahren nach einem der Ansprüche 1 bis 6,
***dadurch gekennzeichnet****, daß*
die Außenbeschichtung mit einer Siebdruckrundschablone (1) erfolgt, deren Außenseite glatt geschliffen ist.

8. Vorrichtung zur Durchführung des Verfahrens nach einem der Ansprüche 1 bis 7, welche Vorrichtung eine im Rundlauf bewegbare Siebdruckrundschablone (1) mit rasterförmig angeordneten Perforationen aufweist, die auf einer mit gleicher Geschwindigkeit im Rundlauf bewegbaren Gegenwalze (10) aufsitzt, durch deren Berührungslinie das zu beschichtende Flächengebilde (3) geführt und mit einer vor eine Innenrakel (4) vorgelegten Paste (5) einer Schmelzkleber bildenden Masse rasterförmig bedruckt wird,
***dadurch gekennzeichnet****, daß*
auf der Außenseite der außenseitig glatt geschliffenen Siebdruckrundschablone (1) in der Höhe des Schablonenzenits eine Außenrakel (6) mit scharf geschliffener Kante aufsitzt, die die Schablonenwandung mit der Rakelfläche auf der Seite der Pasten(2)-zufuhr im stumpfen Winkel von 120 bis 150° berührt.

9. Vorrichtung nach Anspruch (8),
***dadurch gekennzeichnet****, daß*
daß unter der Berührungslinie der Außenrakel (6) mit der Schablonen (1) -wandung eine Stützvorrichtung (7) vorgesehen ist, die mit zwei eng beieinanderstehenden und schräg sitzenden Rakelblechen (7a) bestückt ist und deren Kanten sich an die Innenwandung der Schablone(1)-rundung anpassen und anschmiegen.

10. Vorrichtung nach den Ansprüchen 8 und 9,
***dadurch gekennzeichnet,*** *daß*
auf der Schablonen(1)-außenseite vor der Außenrakel (6) eine weitere nahezu tangential an die Schablone (1) anliegende Rakel (9) vorgesehen ist.

11. Vorrichtung nach einem der Ansprüche 8 bis 10,
***dadurch gekennzeichnet****, daß*
vor der Rakel (9) ein Klettenband (9a) auf der Schablone aufsitzt, das über deren Außenseite gleitet.

12. Vorrichtung nach einem der Ansprüche 8 bis 11,
***dadurch gekennzeichnet****, daß*
die Innenränder der Befestigungen für Außenrakel (6) und Zusatzrakel (9) verlängert sind und zusammen mit den beiden Rakeln einen kleinen Pasten(2)-vorlagetrichter ausbilden.

## Claims

1. Method for the raster-like coating of web-like flexible sheet materials, such as interlining materials for garments, with hot-melt adhesives by applying by the screen printing process two raster-like layers of paste seated on top of one another which on the finished product consist of a base layer which is not or only weakly capable of being heat activated and seated on top of this a layer of hot-melt adhesive capable of being heat activated which has a higher melt flow rate than the base layer,
characterised in that
a paste (2) composed of a solution or preferably a dispersion of a synthetic compound which in the finished product is not or only weakly capable of being heat activated is introduced by doctor blade into the perforations of a round screen printing stencil (1) from the outside, each perforation being filled, and then the round screen printing stencil (1) is brought into contact with the sheet material (3) and imprinted by means of an inner doctor blade (4) with a further paste (5) in addition to the paste (2) applied on the outside which forms the hot-melt compound capable of heat activation and is pressed through the perforations whereupon after detachment of the imprinted sheet material (8) from the round screen printing stencil drying and sintering of the imprint built up in two layers ensues.

2. Method according to Claim 1, characterised in that preferably a partial filling of paste into all the perforations of the round screen printing stencil (1) is carried out from the outside with a doctor blade (6) mounted on the outside of the stencil whose coating edge is ground sharp and which is mounted on the round screen printing stencil (1) at an obtuse angle of 120 to 150° to the stencil wall on the side of the paste (2) receiver and in scooping manner brings about the filling of all the perforations.

3. Method according to Claims 1 and 2, characterised in that the filling of the stencil perforations is carried out from the outside with the aid of a support device (7) which fits against the inside under the contact line of the outer doctor blade (6), extends over the entire width of the round screen printing stencil (1) and on the inner curvature of the stencil (1) nestles against the inner wall of the stencil (1) preferably by two doctor plates (7a) seated close beside one another at a slant under the zenith point of the stencil.

4. Method according to one of Claims 1 to 3, characterised in that the coating paste (2) applied as the base layer with the aid of the outer doctor blade (6) contains polyurethanes, polyacrylates, polybutadiene-acrylonitriles, polybutadiene-styrene-acrylonitriles or acetate copolymers.

5. Method according to one of Claims 1 to 4, characterised in that the outer coating paste (2) contains fine-grained powders composed of hot-melt adhesives, PVC, mineral fillers and furthermore fatty acid salts, plasticizers, thickening agents, coagulants, paraffins or waxes.

6. Method according to one of Claims 1 to 5, characterised in that the hot-melt adhesive paste (5) applied by the inner doctor blade (4) is based on copolyamides, copolyesters, high-density polyethylenes or polyurethanes.

7. Method according to one of Claims 1 to 6, characterised in that the outer coating is done with a round screen printing stencil (1) whose outside is ground smooth.

8. Device for carrying out the method according to one of Claims 1 to 7, which device has a round screen printing stencil (1) which is capable of moving in circular motion and has perforations arranged in a raster pattern and which is mounted on a complementary roller (10) capable of moving in circular motion at the same speed through whose line of contact the sheet material (3) to be coated is conveyed and is imprinted in a raster pattern by a paste (5) of a compound forming hot-melt adhesive provided ahead of an inner doctor blade (4), characterised in that mounted on the outside of the round screen printing stencil (1), which is ground smooth on the outside, at the level of the zenith of the stencil is an outer doctor blade (6) with a sharp ground edge which touches the stencil wall by the doctor blade surface on the side of the paste (2) feed at an obtuse angle of 120 to 150°.

9. Device according to Claim 8, characterised in that under the contact line of the outer doctor blade (6) with the wall of the stencil (1) a support device (7) is provided which is fitted with two doctor plates (7a) seated close beside one another at a slant and whose edges fit and nestle against the inner wall of the curvature of the stencil (1).

10. Device according to Claims 8 and 9, characterised in that on the outside of the stencil (1) ahead of the outer doctor blade (6) a further doctor blade (9) is provided which rests almost tangentially against the stencil (1).

11. Device according to one of Claims 8 to 10, characterised in that mounted on the stencil ahead of the doctor blade (9) is a burring belt (9a) which slides over the outside thereof.

12. Device according to one of Claims 8 to 11, characterised in that the inner edges of the fastenings for the outer doctor blade (6) and the auxiliary doctor blade (9) are elongated and together with the two doctor knives form a small receiving funnel for the paste (2).

## Revendications

1. Procédé de revêtement sous forme de trames de configurations flexibles en forme de bande, telles que des entoilages pour des pièces d'habillement, avec des colles thermofusibles, par application de deux couches de pâte sous forme de trame, placées l'une sur l'autre qui, sur le produit terminé, sont constituées d'une couche de base non, ou seulement faiblement, thermo-activable et d'une couche de colle thermofusible, placée par-dessus, thermo-activable avec un dégré de fusion plus élevé que celui de la couche de base, dans un procédé d'impression sérigraphique,
caractérisé en ce qu'
on introduit à la racle une pâte (2), constituée d'une solution ou, de préférence, d'une dispersion d'une masse de matière synthétique, non ou seulement faiblement thermo-activable sur le produit terminé, dans les perforations d'un gabarit cylindrique. d'impression sérigraphique (1), depuis la face extérieure, en remplissant chaque perforation, et, ensuite, on met en contact le gabarit cylindrique d'impression sérigraphique (1) avec la configuration (3) et, en plus de la pâte (2) appliquée du côté extérieur, avec une racle intérieure (4), avec une autre pâte (5) qui. forme la masse de colle thermofusible thermo-activable, on presse pour faire pénétrer par les perforations, à la suite de quoi après détachement de la configuration (8) imprimée, vis à vis du gabarit cylindrique d'impression sérigraphique, on procède à un séchage et à un frittage de l'impression à double couche.

2. Procédé selon la revendication 1, caractérisé en ce que, de préférence, on effectue un remplissage partiel en pâte de toutes les perforations du gabarit cylindrique d'impression sérigraphique (1) depuis l'extérieur, avec une racle (6) reposant sur la face extérieure du gabarit, racle dont l'arête d'étalement est façonnée à des.angles vifs et qui repose, avec un angle obtus de 120° à 150° par rapport à la paroi du gabarit, sur la face du dessin-modèle en pâte (2), sur le gabarit cylindrique d'impression sérigraphique (1), et provoque le remplissage de toutes les perforations par un effet d'étalement.

3. Procédé selon la revendication 1 ou 2, caractérisé en ce que le remplissage des perforations de gabarit depuis l'extérieur est effectué avec l'aide d'un dispositif de soutien (7) appuyé en côté intérieur sous la ligne de contact de la racle extérieure (6), qui couvre la largeur globale du gabarit cylindrique d'impression sérigraphique (1) et qui épouse la forme de la courbure intérieure du gabarit (1) avec de préférence deux tôles de racle (7a) placé étroitement l'une à côté de l'autre sous le zénith de gabarit et placées obliquement sur la paroi intérieure de gabarit (1).

4. Procédé selon l'une des revendications 1 à 3,
caractérisé en ce que la pâte d'enduction (2), appliquée à titre de couche de base à l'aide de la racle extérieure (6), contient des polyuréthanes, des polyacrylates, des polybutadiène acrylnitriles, des polybutadiène-styrène-acrynitriles ou des copolymères d'acétate.

5. Procédé selon l'une des revendications 1 à 4,
caractérisé en ce qu'une pâte d'enduction extérieure (2) contient de la poudre à grain fin, constituée de colles thermofusibles, de PVC, de charges minérales et, en outre, de sels d'acides gras, de plastifiants, d'épaississants, de coagulants, de paraffine ou de cire.

6. Procédé selon l'une des revendications 1 à 5,
caractérisé en ce que la pâte de colle thermofusible (5) appliquée à l'aide de la racle intérieure (4) est à base de copolyamides, copolyesters, polyéthylènes basse-pression ou polyuréthanes.

7. Procédé selon l'une des revendications 1 à 6,
caractérisé en ce que l'enduction extérieure s'effectue à l'aide d'un gabarit cylindrique d'impression sérigraphique (1), dont la face extérieure est façonnée par meulage-rectification, afin d'être lisse.

8. Dispositif de mise en oeuvre du procédé selon l'une des revendications 1 à 7, le dispositif présentant un gabarit cylindrique d'impression sérigraphique (1) déplaçable en mouvement de rotation, avec des perforations disposées en forme de trames, le gabarit reposant sur un contre-rouleau (10) déplaçable et mis en rotation à la même vitesse, à travers la ligne de contact desquels la configuration (3) à enduire est guidée et est imprimée sous forme de trames, avec une pâte (5), alimentée devant une racle intérieure (4), d'une masse formant une colle thermofusible,
caractérisé en ce que,
sur la face extérieure du gabarit cylindrique d'impression sérigraphique (1), façonnée par meulage-rectification pour être lisse, à hauteur du zénith de gabarit est placée une racle extérieure (6) dont l'arête est meulée à angle vif, arête qui met en contact la paroi de gabarit avec la surface de racle du côté de l'amenée de pâte (2), sous un angle obtus de 120 à 150°.

9. Dispositif selon la revendication 8, caractérisé en ce que, sous la ligne de contact de la racle extérieure (6) avec la paroi de gabarit (1) est prévu un dispositif de soutien (7) équipé de deux tôles de racle (7a), placées étroitement l'une à côté de l'autre et orientées obliquement et dont les arêtes s'adaptent et épousent la forme de la paroi intérieure de l'arrondi de gabarit (1).

10. Dispositif selon les revendications 8 et 9,
caractérisé en ce sur la face extérieure de gabarit (1), devant la racle extérieure (6), est prévue une autre racle (9) qui appuie à peu près tangentiellement sur le gabarit (1).

11. Dispositif selon les revendications 8 à 10,
caractérisé en ce qu'une bande égrateronneuse (9a), qui glisse sur la face extérieure du gabarit est placée sur celui-ci, devant la racle (9).

12. Dispositif selon l'une des revendications 8 à 11,
caractérisé en ce que les bords intérieurs des fixations de la racle extérieure (6) et de la racle additionnelle (9) sont prolongées et forment, conjointement avec les deux racles, un petit entonnoir d'alimentation en pâte (2).
